# FASCICULE DE BREVET EUROPEEN

(11) **EP 1 553 310 B1**
(45) Date de publication et mention de la délivrance du brevet: **08.11.2006**
(21) Numéro de dépôt: 05356009.0
(22) Date de dépôt: 11.01.2005
(51) Int. Cl.: F16B 7/18, F16B 7/04, F16B 39/16

(54) **Dispositif de verrouillage réversible sur une structure d'un embout à positionnement ajustable**
Vorrichtung zur lösbaren Verriegelung eines Endstückes auf einer Struktur mit verstellbarer Position
A reversible device for locking an end piece on a structure with adjustable position

(30) Priorité: 12.01.2004 FR 0400234
(43) Date de publication de la demande: 13.07.2005
(73) Titulaire: SKF Aerospace France, 26240 Saint Vallier (FR)
(72) Inventeur: Genot, Michel, 39140 Bletterans (FR); Jacquemin-Verguet, Alain, 39570 Macornay (FR); Giboudot, Jean-Charles, 39210 Voiteur (FR); Bigot, Charles, 39000 Lons le Saunier (FR)
(74) Mandataire: Myon, Gérard Jean-Pierre

(56) Documents cités:
- WO-A-89/06756
- GB-A- 191 226 012
- US-A- 5 255 993

## Description

La présente invention concerne un dispositif de verrouillage réversible d'un embout sur une structure et vise plus spécifiquement un dispositif de verrouillage/déverrouillage qui, dans une configuration déverrouillée, permet l'ajustement en « tension », c'est-à-dire l'ajustement de l'écartement entre l'embout et la structure et qui, dans une configuration verrouillée, fige de manière certaine l'ajustement réalisé.

L'invention s'applique de manière générale à des domaines dans lesquels des embouts ou analogues sont à assembler de manière ajustée sur une structure ou plus généralement un châssis soumis par la suite à des vibrations. C'est par exemple le cas du domaine aéronautique dans lequel des composants tels que des coffres à bagages sont à rapporter au fuselage d'un aéronef.

Pour permettre l'ajustement de la distance séparant l'embout de la structure, alors que le dispositif de verrouillage est dans sa configuration déverrouillée, l'embout est solidaire d'une tige extérieurement filetée, qui est vissée à l'intérieur d'un alésage taraudé de façon complémentaire, délimité dans la structure ou, le plus souvent, dans un corps rigide solidairement rapporté sur la structure. Dans sa configuration verrouillée, le dispositif est alors destiné à interdire, ou en tout cas à empêcher autant que possible, la rotation de l'embout par rapport à la structure pour éviter de modifier l'ajustement réglé au préalable.

Pour verrouiller l'embout sur la structure, une première solution consiste à conformer le fond de l'alésage de réception de la tige filetée en un tronc de cône de manière à ce que l'extrémité libre de cette tige se coince à l'intérieur du tronc de cône lorsqu'elle progresse par vissage à l'intérieur de l'alésage. Cette solution présente de nombreux inconvénients. D'abord, la tenue mécanique du verrouillage de l'embout sur la structure est faible. De plus, l'amplitude d'ajustement envisageable est limitée de par la pente du cône de coincement. Enfin, dès que l'embout est dévissé après avoir été verrouillé une première fois, il devient délicat, voire impossible de bloquer à nouveau l'extrémité de la tige de l'embout dans le tronc de cône de coincement.

Une deuxième solution consiste à utiliser un dispositif de verrouillage comportant, d'une part, un écrou six pans rapporté autour du corps rigide solidaire de la structure et, d'autre part, un bras articulé sur l'embout autour d'un axe transversal à la direction longitudinale de la tige filetée à introduire dans l'alésage du corps rigide. Ce bras est pourvu à son extrémité libre d'un manchon flexible globalement en forme de six pans, complémentaire de l'écrou lié au corps rigide. Ce manchon est ouvert sur une partie de sa périphérie de manière à pouvoir être déformé radialement pour, lorsque le bras articulé est basculé vers le corps rigide, venir coiffer l'écrou, bloquant ainsi en rotation l'embout par rapport au corps rigide. Bien que ce dispositif présente l'avantage d'être réversible, il ne garantit cependant pas un verrouillage très efficace puisque, en raison de la flexibilité du manchon de blocage, l'application d'un fort couple de rotation sur l'embout provoque facilement la déformation du manchon et, par là, permet la rotation de l'embout par rapport à la structure sur au moins un sixième de tour. De plus, le manchon de blocage de ce dispositif est difficile à manipuler.

On connaît par ailleurs, de GB-A-M26012, un ensemble de verrouillage de deux tubes l'un à l'autre, l'un des tubes délimitant un alésage taraudé de réception de l'extrémité filetée de l'autre tube. Cet ensemble de verrouillage comporte, autour des extrémités des tubes vissées l'une dans l'autre, une bague et un manchon à même d'être vissés l'un à l'autre jusqu'à ce que cette bague et ce manchon enserrent des brides accolées, respectivement solidaires des deux tubes. Tant que le vissage entre la bague et le manchon est incomplet, ces éléments restent libres de tourner autour de leur tube associé puisque des jeux radiaux respectifs subsistent entre ces éléments et les tubes. Il en résulte que le verrouillage des deux tubes n'est envisageable que si le vissage de ces tubes l'un à l'autre est suffisant pour que les brides des tubes soient fermement accolées l'une contre l'autre. Si un espace libre subsiste entre ces brides, le verrouillage obtenu par le vissage l'un à l'autre de la bague et du manchon n'empêche pas, par la suite, de modifier, par vissage, les positions relatives des deux tubes. Autrement dit, l'ensemble de verrouillage proposé dans GB-A-M26012 ne relève pas du domaine de l'invention qui permet un libre ajustement « en tension » entre la structure et l'embout à verrouiller.

Le but de la présente invention est de proposer un nouveau dispositif de verrouillage réversible, qui garantit un verrouillage efficace de l'embout par rapport à la structure, même lorsque cet embout est sollicité sous un fort couple, tout en étant facile et rapide à manoeuvrer.

A cet effet, l'invention a pour objet un dispositif de verrouillage réversible d'un embout sur une structure, comportant un corps rigide solidaire de la structure et délimitant un alésage taraudé de réception d'une tige solidaire de l'embout et pourvue d'un filet extérieur complémentaire de l'alésage taraudé, l'embout étant verrouillé par le dispositif dans une position, par rapport à la structure, qui, avant verrouillage, est librement ajustée par vissage de la tige dans l'alésage du corps, caractérisé en ce qu'il comporte, d'une part, une bague montée autour de la tige à la fois libre en translation axiale le long de cette tige et liée en rotation avec cette tige et, d'autre part, un manchon de blocage réversible de la bague en appui contre le corps, rapporté de façon mobile autour du corps.

Une fois que la position de l'embout est ajustée par rapport au corps rigide, par vissage de sa tige dans l'alésage du corps, le manchon est déplacé pour venir bloquer, notamment axialement, la bague initialement libre de se déplacer en translation par rapport à la tige, ce qui provoque le verrouillage du dispositif. La rigidité des composants du dispositif assure une bonne tenue mécanique en configuration verrouillée. De plus, le dispositif peut se manipuler d'une seule main en manoeuvrant successivement la bague et le manchon.

D'autres caractéristiques avantageuses de ce dispositif sont énoncées aux revendications dépendantes 2 à 10.

L'invention sera mieux comprise à la lecture de la description qui va suivre, donnée uniquement à titre d'exemple et faite en se référant aux dessins, sur lesquels :
- la figure 1 est une vue en perspective d'un dispositif de verrouillage selon l'invention, dans une configuration déverrouillée ;
- la figure 2 est une coupe longitudinale suivant le plan de coupe II indiqué à la figure 1, le dispositif étant dans une configuration verrouillée ;
- la figure 3 est une coupe longitudinale suivant le plan III-III indiqué à la figure 2 ; et
- la figure 4 est une vue à plus grande échelle du détail IV de la figure 2.

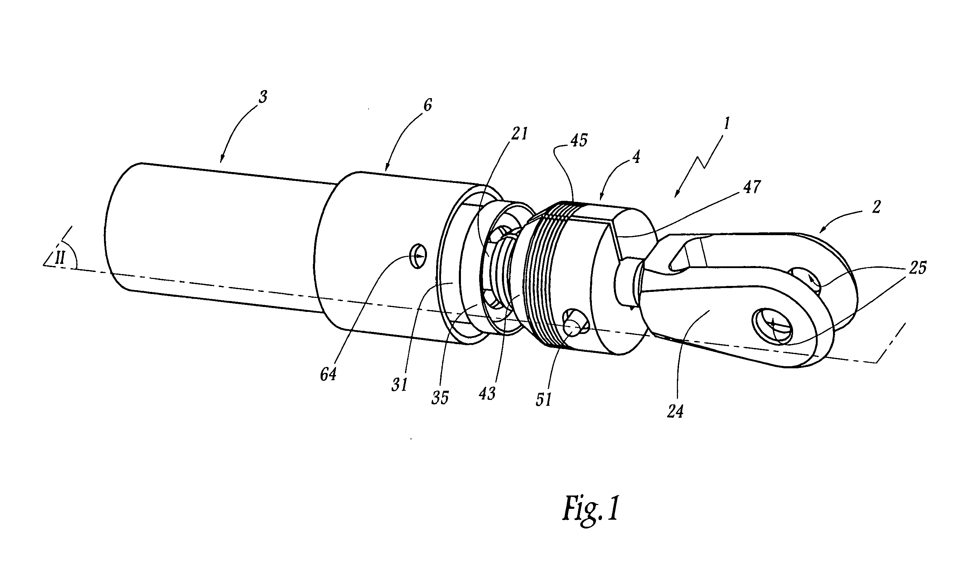

Le dispositif de verrouillage/déverrouillage 1 représenté sur les figures 1 à 4 est adapté pour verrouiller mécaniquement un embout 2 sur une structure tubulaire 3 d'axe longitudinal X-X. A titre d'exemple, la structure 3 constitue une partie du châssis d'un ensemble de coffres à bagages embarqués à bord d'un avion et l'embout 2 est destiné à être relié au fuselage de l'avion.

Par commodité, la suite de la description sera orientée en considérant que le terme « avant » désigne une direction dirigée vers la structure 3, c'est-à-dire vers la gauche sur les figures 1 à 4, tandis que le terme « arrière » désigne une direction de sens opposé.

L'embout 2 comporte une partie avant 21 sous forme d'une tige cylindrique pleine, d'axe longitudinal confondu avec l'axe X-X sur les figures. La partie avant de cette tige 21 est pourvue d'un filet extérieur 22. Une rainure rectiligne 23 est creusée sur toute la longueur de la tige.

A son extrémité arrière, la tige 21 est solidaire d'un étrier 24 dont les branches s'étendent globalement suivant des directions parallèles à l'axe X-X et sont percées de part en part par des orifices 25 alignés suivant une direction sensiblement perpendiculaire à l'axe X-X. Ces orifices 25 sont destinés à recevoir une tige non représentée de solidarisation de l'embout 2 à un composant structurel non représenté, par exemple une partie du fuselage de l'avion, qui, lors de son utilisation, est soumise à des contraintes mécaniques et/ou à des vibrations induisant sur l'embout 2 un couple de rotation autour de l'axe X-X.

En vue de lier l'embout 2 à la structure tubulaire 3, cette dernière est équipée d'un corps rigide 31 globalement tubulaire et d'axe X-X. Ce corps est solidarisé de manière fixe à la structure 3 en étant par exemple emmanché en force dans l'extrémité arrière de la structure. En variante non représentée, le corps 31 est directement venu de matière avec la structure.

Le corps 31 est traversé de part en part suivant l'axe X-X par un alésage intérieur 32 taraudé de façon complémentaire au filet extérieur 22 de la tige 21. De cette façon, la tige de l'embout 2 est à même d'être vissée dans l'alésage 32 de manière à ajuster l'écartement axial entre le corps rigide 31 et l'étrier 24, c'est-à-dire à ajuster « en tension » la structure et l'embout.

En arrière de l'alésage 32, le corps 31 présente une zone tubulaire 33 de diamètre intérieur supérieur au diamètre de l'alésage, formant ainsi un épaulement radial interne 34. L'extrémité arrière de cette zone 33 est extérieurement constituée d'une bride 35 qui s'étend radialement en saillie du reste de la surface extérieure du corps 31 en formant un épaulement radial externe 36. La surface interne 37 de la bride 35 est de forme tronconique convergente en direction de l'axe X-X, vers l'avant.

Le dispositif 1 comporte également une bague rigide 4 globalement tubulaire, par exemple métallique. Cette bague peut être enfilée autour de la tige 21. Au niveau de l'alésage intérieur de la bague, est prévue une cannelure d'entraînement 41 s'étendant sur toute la longueur de la bague et sensiblement complémentaire de la rainure 23 creusée à la surface de la tige 21. Ainsi, lorsque la bague 4 est montée sur la tige 21, elle est liée en rotation avec la tige, tout en restant libre en translation axiale le long de cette tige.

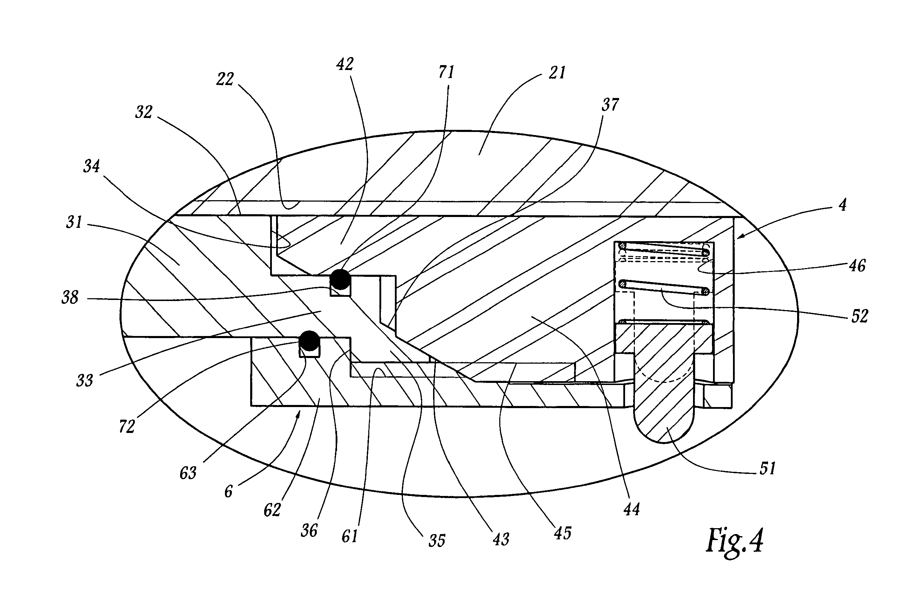

Comme représenté plus en détail à la figure 4, la bague 4 est constituée successivement :
- d'une partie avant 42 essentiellement cylindrique à base circulaire, de diamètre extérieur sensiblement égal au diamètre intérieur de la partie arrière 33 du corps 31, l'extrémité avant de cette partie 42 étant conformée de manière tronconique convergente en direction de l'axe X-X, vers l'avant, pour faciliter l'introduction de la bague 4 à l'intérieur de la zone 33 ;
- d'une partie intermédiaire de forme tronconique convergente en direction de l'axe X-X, vers l'avant, la surface extérieure tronconique de cette partie intermédiaire étant référencée 43 ; et
- d'une partie arrière 44 essentiellement cylindrique à base circulaire, pourvue à l'avant d'un filet extérieur 45 dont le sens de filetage est, pour des raisons expliquées plus loin, inverse du sens du filet 22 de la tige 21.

Dans la partie arrière 44 de la bague 4 est creusé un logement radial 46 globalement cylindrique à l'intérieur duquel sont disposés un pion 51 et un ressort de compression 52 interposé radialement entre la base du pion et le fond du logement.

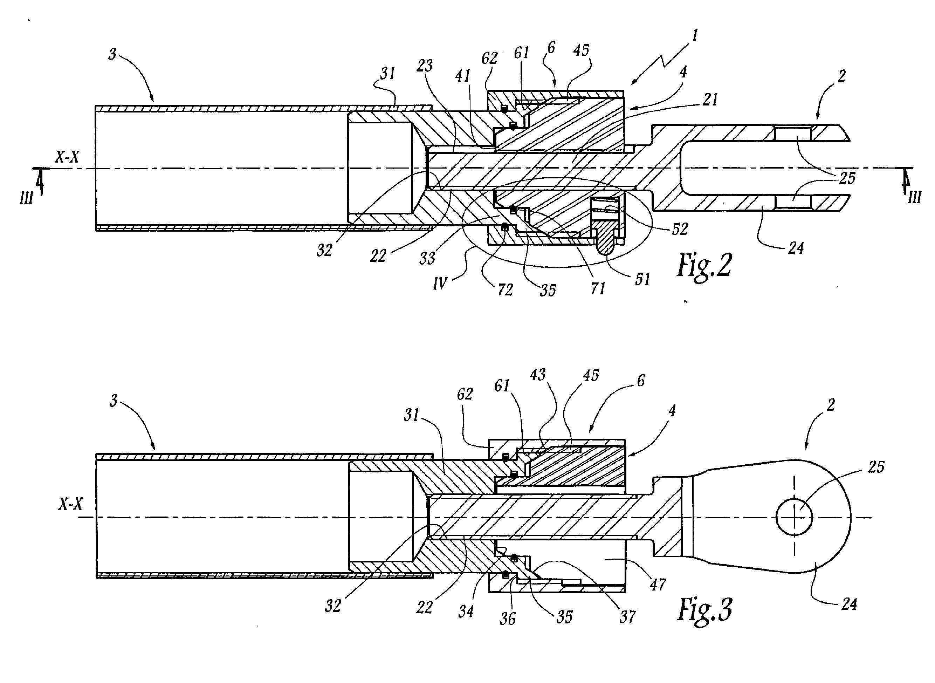

La bague 4 est axialement fendue sur toute sa longueur, comme représenté sur la figure 3 qui correspond au plan de coupe passant par la fente correspondante 47.

Le dispositif 1 comporte en outre un manchon rigide 6 globalement tubulaire, par exemple métallique, rapporté de façon mobile autour du corps 31 de façon sensiblement coaxiale à l'alésage 32. Dans sa partie courante, le manchon 6 présente un diamètre intérieur sensiblement égal au diamètre extérieur de la bride d'extrémité 35 et est pourvu intérieurement d'un taraudage 61 sensiblement complémentaire du filet 45 de la bague 4. A l'avant de ce taraudage 61, le manchon 6 est muni d'un talon d'extrémité 62 s'étendant radialement vers l'intérieur et de diamètre intérieur sensiblement égal au diamètre extérieur du corps tubulaire 31.

Le dispositif 1 comporte enfin deux joncs annulaires souples 71 et 72 logés respectivement dans une rainure 38 creusée dans la partie arrière 33 du corps 31, depuis sa face interne, et dans une rainure 63 creusée dans le talon d'extrémité 62 du manchon 6, depuis sa face interne.

Le fonctionnement du dispositif 1 est le suivant :

Dans un premier temps, le dispositif 1 est dans une configuration déverrouillée telle que représentée sur la figure 1. Dans cette configuration, le manchon 6 est situé en avant de la bride d'extrémité arrière 35 du corps 31 et la bague 4 est librement déplaçable en translation axiale entre l'extrémité arrière de la rainure 23 et le corps 31, la tige 21 étant engagée à l'intérieur de l'alésage 32. Dans cette configuration déverrouillée, le pion 51 s'étend, sous l'action du ressort 52, en partie en saillie de la surface extérieure de la partie arrière 44 de la bague 4. Des moyens non représentés sont prévus pour éviter que ce pion 51 ne se dégage totalement du logement 46.

L'embout 2 est alors librement vissée et/ou dévissée dans le corps 31 de manière à ajuster l'écartement axial entre ces éléments.

Une fois ce réglage effectué, l'utilisateur fait coulisser axialement, notamment d'une seule main, la bague 4 vers l'avant jusqu'à ce que sa surface tronconique 43 vienne sensiblement au contact de la surface interne tronconique 37 de la bride d'extrémité arrière 35 du corps 31. Lorsque ces surfaces 37 et 43 sont en contact à un jeu fonctionnel près, le jonc 71 s'encliquette à l'intérieur d'une gorge annulaire creusée à la surface extérieure de la partie avant 42 de la bague. La bague est alors axialement retenue par rapport au corps 31, l'utilisateur devant vaincre la résistance du jonc 71 s'il souhaite dégager vers l'arrière la bague.

Pour effectuer un blocage efficace, notamment en translation axiale, de la bague 4 par rapport au corps tubulaire 31, on utilise le manchon rigide 6. Plus précisément, le manchon passe de sa position de la figure 1 à sa position des figures 2 à 4 en étant coulissé axialement vers l'arrière jusqu'à ce que son taraudage intérieur 61 vienne en butée axiale contre le filet extérieur 45 de la bague.

Pour ne pas empêcher le manchon 6 de coulisser librement vers l'arrière, l'utilisateur repousse radialement le pion 51 à l'intérieur de son logement 46, en comprimant le ressort 52. Le pion et le ressort sont représentés dans cette configuration en traits pointillés sur la figure 4.

L'utilisateur visse ensuite le manchon 6 sur la bague 4, provoquant le serrage de cette dernière contre le corps 31, la surface tronconique 43 étant pressée contre la surface tronconique 37. Lors de l'amorçage du vissage du manchon 6 autour de la bague 4, le jonc 71 retient axialement la bague et évite qu'elle ne soit repoussée vers l'arrière.

Dans la mesure où les sens des filets 22 de l'embout 2 et 45 de la bague 4 sont inverses, le vissage du manchon 6 n'entraîne pas la mise en rotation de l'embout 2 à l'intérieur de l'alésage 32, ce qui garantit que l'ajustement en longueur de l'ensemble embout 2 - structure 3 n'est pas modifié.

Lors du serrage de la bague, les bords de la fente 47 tendent à se refermer l'un sur l'autre de manière à rattraper les jeux du dispositif 1.

Le serrage de la bague 4 par le manchon 6 contre le corps 31 se poursuit jusqu'à ce que le talon 62 vienne en butée axiale contre l'épaulement externe 36 du corps 31, provoquant alors l'encliquetage du jonc 72 à l'intérieur d'une gorge annulaire creusée à la surface extérieure du corps 31. Le dispositif 1 est alors de sa configuration verrouillée des figures 2 à 4.

L'arrivée en fin de vissage du manchon 6 sur la bague 4 provoque également l'alignement radial du logement 46 avec un orifice radial 64 traversant le manchon 6 dans sa partie arrière. La section transversale de ce trou 64 étant au moins supérieure à la section transversale du pion 51, ce dernier se déploie alors radialement vers l'extérieur sous l'effet du ressort 52, son extrémité extérieure s'étendant en saillie vers l'extérieur du manchon 6. Dans son état déployé des figures 2 à 4, le pion 51 indique donc à l'utilisateur que le manchon 6 est convenablement serré sur la bague 4, c'est-à-dire que le couple de serrage appliqué par ce manchon sur la bague est suffisant pour garantir le verrouillage escompté du dispositif 1.

Dans cette configuration verrouillée, la bague 4 est immobilisée par le manchon 6 par rapport au corps tubulaire 31 de sorte que, lorsque l'embout 2 est soumis ultérieurement à des vibrations ou à des contraintes extérieures, tout mouvement de rotation de l'embout autour de l'axe X-X est empêché.

On comprend que pour que le blocage de la bague 4 par le manchon de serrage 6 soit le plus efficace possible, la coopération du filet 45 et du taraudage 61 est essentielle. A cet effet, plusieurs dispositions indépendantes et cumulatives sont envisageables. D'abord, le sens du filet 45 peut être prévu pour provoquer un serrage encore plus important de la bague 4 par le manchon 6 lorsque l'embout 2 est sollicité par celui des deux couples envisageables, qui est d'intensité et/ou de fréquence les plus grandes. De la sorte, lorsque ce couple important ou répétitif est appliqué sur l'embout 2, le dispositif 1 provoque en quelque sorte un verrouillage plus intense. L'épaulement 34 forme cependant une surface de butée correspondant à l'enfoncement axial maximal admissible de la bague 4 dans le corps 31 pour éviter d'endommager le dispositif au niveau de ses surfaces tronconiques 37 et 43.

Ensuite, l'étendue des surfaces de matière mise en prise au niveau du filetage 45 et du taraudage 61 peut être dimensionnée de manière élevée, en imposant un angle d'hélice à cet ensemble filetage-taraudage relativement faible, par exemple inférieur à 30°. De la sorte, lorsque le filetage 45 est complètement en prise avec le taraudage 61, la bague 4 et le manchon 6 sont en quelque sorte en arc-boutement.

De même, le nombre de tours en prise du filetage 45 et du taraudage 61 influe sur la résistance du blocage de la bague 4 par le manchon 6.

Lorsque le dispositif 1 est dans sa configuration de verrouillage et que l'utilisateur souhaite le déverrouiller, il repousse radialement vers l'intérieur le pion 51, si nécessaire à l'aide d'un outil approprié, ce qui constitue une manoeuvre de déverrouillage dont l'utilisateur est nécessairement conscient. Il dévisse ensuite partiellement vers l'avant le manchon 6 en ayant préalablement à vaincre la résistance du jonc 72. Alors que le filetage 45 est encore partiellement en prise avec le taraudage 61, il pousse axialement vers l'arrière le manchon 6, entraînant alors axialement la bague 4. L'ajustement en longueur de l'embout 2 par rapport à la structure 3 peut alors être modifié ou bien le manchon 6 continue d'être dévissé jusqu'à ce qu'il se dégage totalement de la bague 4.

On comprend que si, en coupe transversale, le trou 64 est sensiblement complémentaire du contour extérieur du pion 51, la coopération de ce pion et de ce trou lorsque le dispositif 1 atteint sa configuration de verrouillage, rend inutile la présence du jonc souple 72, l'utilisateur ayant à vaincre la résistance du ressort 62 pour pouvoir commencer à dévisser le manchon 6.

Divers aménagements et variantes au dispositif de verrouillage/déverrouillage 1 décrit ci-dessus sont en outre envisageables :
- les joncs 71 et 72 peuvent être remplacés par tout anneau de sûreté souple permettant les retenues axiales respectives de la bague 4 par rapport au corps 31 et du manchon 6 par rapport à ce corps, par exemple par des circlips ou des joints élastomères ;
- la bague 4 peut être équipée de plusieurs cannelures analogues à la cannelure 41 et coopérant avec autant de rainures creusées à la surface de la tige 21 ;
- la cannelure d'entraînement peut avoir différents profils en coupe transversale, par exemple rectangulaire, trapézoïdal, plat, incurvé, etc. ;
- la partie arrière de l'embout 2 n'est pas limitée à la forme en étrier décrite ci-dessus, mais est adaptable de manière générale à tout organe de liaison mécanique, par exemple une rotule ; et/ou
- la géométrie de la structure 3 sur laquelle le dispositif 1 verrouille l'embout 2 n'est pas nécessairement tubulaire.

## Revendications

1. Dispositif de verrouillage réversible d'un embout (2) sur une structure (3) comportant un corps rigide (31) solidaire de la structure et délimitant un alésage taraudé (32) de réception d'une tige (21) solidaire de l'embout et pourvue d'un filet extérieur (22) complémentaire de l'alésage taraudé, l'embout étant verrouillé par le dispositif dans une position, par rapport à la structure, qui, avant verrouillage, est librement ajustée par vissage de la tige dans l'alésage du corps, **caractérisé en ce qu**'il comporte, d'une part, une bague (4) montée autour de la tige (21) à la fois libre en translation axiale le long de cette tige et liée en rotation avec cette tige et, d'autre part, un manchon (6) de blocage réversible de la bague en appui contre le corps (31), rapporté de façon mobile autour du corps.

2. Dispositif suivant la revendication 1, **caractérisé en ce que** le manchon (6) est pourvu de moyens (61) de serrage axial de la bague (4) contre le corps (31).

3. Dispositif suivant la revendication 2, **caractérisé en ce que** les moyens de serrage comprennent un taraudage (61) adapté pour coopérer avec un filet complémentaire (45) de la bague (4).

4. Dispositif suivant la revendication 3, **caractérisé en ce que** les sens du filet extérieur (22) de la tige (21) et du filet (45) de la bague (4) sont inversés.

5. Dispositif suivant l'une quelconque des revendications 2 à 4, **caractérisé en ce qu**'il comporte un anneau de sûreté souple (71) interposé entre la bague (4) et le corps (31), adapté pour retenir axialement la bague par rapport au corps lors de l'amorce de l'application d'un effort de serrage par le manchon (6).

6. Dispositif suivant l'une quelconque des revendications 2 à 5, **caractérisé en ce qu**'il comporte un anneau de sûreté souple (72) interposé entre le manchon (6) et le corps (31), adapté pour retenir axialement le manchon par rapport au corps lorsque la bague (4) est serrée par le manchon.

7. Dispositif suivant l'une quelconque des revendications 2 à 6, **caractérisé en ce qu'**il comporte des moyens (51, 52) pour indiquer qu'un effort de serrage de valeur prédéterminée est appliqué par le manchon (6) sur la bague (4).

8. Dispositif suivant la revendication 7, **caractérisé en ce que** lesdits moyens comportent un pion (51) radialement mobile par rapport au manchon (6) et un moyen élastique de compression (52) radialement interposé entre le pion (51) et la bague (4), un trou traversant (64), qui permet le passage du pion, étant ménagé dans une zone du manchon (6) située à l'aplomb radial du pion lorsque l'effort de serrage appliqué par le manchon atteint ladite valeur prédéterminée.

9. Dispositif suivant l'une quelconque des revendications précédentes, **caractérisé en ce que** le corps (31) porte une surface (36) de butée axiale pour le manchon (6) .

10. Dispositif suivant l'une quelconque des revendications précédentes, **caractérisé en ce que** la bague (4) est au moins en partie axialement fendue.

## Claims

1. Reversible locking device for locking an end piece (2) onto a structure (3) including a rigid body (31) integral with the structure and delimiting a threaded bore (32) for reception of a rod (21) integral with the end piece and provided with an external thread (22) complementary to the threaded bore, the end piece being locked by the device into a position, relative to the structure, which, before locking, is freely adjusted by screwing the rod in the bore of the body, **characterised in that** it includes, firstly, a ring (4) fitted around the rod (21) being both free to translate axially along the length of this rod and rotationally fixed to this rod and, secondly, a sleeve (6) for reversibly locking the ring against the body (31), mounted in a moveable manner around the body.

2. Device according to claim 1, **characterised in that** the sleeve (6) is provided with means (61) for axially holding the ring (4) against the body (31).

3. Device according to claim 2, **characterised in that** the holding means includes an internal thread (61) adapted to cooperate with a complementary thread (45) on the ring.

4. Device according to claim 3, **characterised in that** the directions of the external thread (22) of the rod (21) and of the thread (45) on the ring (4) are opposed.

5. Device according to any one of claims 2 to 4, **characterised in that** it includes a flexible locking ring (71) positioned between the ring (4) and the body (31), adapted to axially retain the ring relative to the body when torque is initially applied by the sleeve (6).

6. Device according to any one of claims 2 to 5, **characterised in that** it includes a flexible locking ring (72) positioned between the sleeve (6) and the body (31), adapted to axially retain the sleeve relative to the body when the ring (4) is gripped by the sleeve.

7. Device according to any one of claims 2 to 6, **characterised in that** it includes means (51, 52) for indicating that a torque of a predetermined value is applied by the sleeve (6) to the ring (4).

8. Device according to claim 7, **characterised in that** said means includes a pin (51) radially moveable relative to the sleeve (6) and an elastic compression means (52) radially placed between the pin (51) and the ring (4), a through bore (64), which allows the passage of the pin, being made in an area of the sleeve (6) situated radially perpendicular to the pin when the torque applied by the sleeve reaches said predetermined value.

9. Device according to any one of the preceding claims, **characterised in that** the body (31) has an axial abutment surface (36) for the sleeve (6).

10. Device according to any one of the preceding claims, **characterised in that** the ring (4) is at least partially axially split.

## Patentansprüche

1. Vorrichtung zur reversiblen Verriegelung eines Ansatzes (2) auf einer Struktur (3), die einen fest mit der Struktur verbundenen starren Körper (31) umfasst, der eine Gewindebohrung (32) zur Aufnahme eines fest mit dem Ansatz (2) verbundenen Stiftes (21) begrenzt, der mit einem Außengewinde (22), komplementär zur Gewindebohrung, versehen ist, wobei der Ansatz durch die Vorrichtung in Bezug auf die Struktur in einer Position verriegelt ist, die vor der Verriegelung durch Einschrauben des Stiftes in die Bohrung des Körpers frei einstellbar ist,
**dadurch gekennzeichnet, dass** sie einerseits einen um den Stift (21) in axialer Richtung längs des Stiftes frei beweglichen und bezüglich der Rotation fest mit dem Stift verbundenen Ring (4) und andererseits eine Hülse (6) zur reversiblen Blockierung des Ringes in Abstützung gegen den Körper (31) umfasst, die um den Körper herum in beweglicher Weise aufgesetzt ist.

2. Vorrichtung nach Anspruch 1, **dadurch gekennzeichnet, dass** die Hülse (6) mit Mitteln (61) zum axialen Spannen des Ringes (4) gegen den Körper (41) versehen ist.

3. Vorrichtung nach Anspruch 2, **dadurch gekennzeichnet, dass** die Mittel zum Spannen ein Gewinde (61) umfassen, das geeignet ist, mit einem komplementären Gewinde (45) des Ringes (4) zusammenzuarbeiten.

4. Vorrichtung nach Anspruch 3, **dadurch gekennzeichnet, dass** die Richtungen des Außengewindes (22) des Stiftes (21) und des Gewindes (45) des Ringes (4) entgegengesetzt sind.

5. Vorrichtung nach einem beliebigen der Ansprüche 2 bis 4, **dadurch gekennzeichnet, dass** sie einen biegbaren Sicherheitsring (71) umfasst, der zwischen dem Ring (4) und dem Körper (31) angeordnet ist und geeignet ist, den Ring in Bezug auf den Körper beim Ausgangspunkt der Aufbringung einer Spannkraft durch die Hülse (6) axial zu halten.

6. Vorrichtung nach einem beliebigen der Ansprüche 2 bis 5, **dadurch gekennzeichnet, dass** sie einen biegbaren Sicherheitsring (72) umfasst, der zwischen der Hülse und dem Körper (31) angeordnet ist und ausgebildet ist, die Hülse in Bezug auf den Körper zu halten, wenn der Ring (4) durch die Hülse gespannt wird.

7. Vorrichtung nach einem der Ansprüche 2 bis 6, **dadurch gekennzeichnet, dass** sie Mittel (51, 52) zur Anzeige, dass eine Spannkraft vorbestimmter Größe von der Hülse (6) auf den Ring (4) aufgebracht wird, umfasst.

8. Vorrichtung nach Anspruch 7, **dadurch gekennzeichnet, dass** die Mittel ein Ansatzstück (51), das radial in Bezug auf die Hülse (6) beweglich ist und ein elastisches Kompressionsmittel (52) umfassen, das zwischen dem Ansatzstück (51) und dem Ring (4) angeordnet ist, wobei ein Durchgangsloch (64), das den Durchgang des Ansatzstückes erlaubt, in eine Zone der Hülse (6) eingebracht ist, die radial in senkrechter Richtung zum Ansatzstück liegt, wenn die von der Hülse aufgebrachte Spannkraft den vorbestimmten Wert erreicht.

9. Vorrichtung nach einem der vorhergehenden Ansprüche, **dadurch gekennzeichnet, dass** der Körper (31) eine Fläche (36) für einen axialen Anschlag der Hülse (6) trägt.

10. Vorrichtung nach einem der vorhergehenden Ansprüche, **dadurch gekennzeichnet, dass** der Ring (4) mindestens teilweise axial geschlitzt ist.
